# EUROPEAN PATENT APPLICATION

(11) **EP 3 960 396 A1**
(43) Date of publication of application: **02.03.2022**
(21) Application number: 20193581.4
(22) Date of filing: 31.08.2020
(51) Int. Cl.: B25J 9/16, G05B 19/409, G05B 19/408

(54) **ENHANCEMENT OF HUMAN-MACHINE INTERFACE (HMI) FOR CONTROLLING A ROBOT**

(71) Applicant: Siemens Aktiengesellschaft, 80333 München (DE)
(72) Inventor: Ionescu, Tudor, 1190 Wien (AT); Fröhlich, Joachim, 85614 Kirchseeon (DE); Lachenmayr, Markus, 80992 München (DE)

(57) **Abstract**

Provided are a method for providing an enhanced human-machine interface (HMI) to control a robot, and a device supporting the method. According to one embodiment of the present invention, a method includes:
monitoring a manipulation input by a user for an operation of the robot on the enhanced HMI, which is enhanced from a proprietary HMI proprietary to the robot;
generating a first program in a first program environment for the enhanced HMI in response to the monitored manipulation;
retrieving action information relating to actions to be performed as part of the operation of the robot, wherein the actions are defined in a second program environment for the proprietary HMI;
generating a second program in the second program environment corresponding to the first program by using the retrieved action information; and
controlling the robot to perform the operation using the second program.

## Description

### Field of the Invention

The present invention is related to an automation of a human-machine interface (HMI).

### Background of the invention

A graphical user interface (GUI) is a form of user interface that allows users to interact with electronic devices through graphical icons and audio indicators, instead of text-based user interfaces, typed command labels or text navigation.

GUI automation tools leverage computer vision and machine learning algorithms to process visual elements in GUIs in near real time and to emulate the user interactions required to react to those events. While such tools are commonly used for testing interactive software systems, GUI automation technologies also enable non-intrusive extension of industrial human-machine interfaces (HMIs).

GUI automation has proven successful in business process automation and public administration domains (in which it is better known as robotic process automation (RPA)), where vendor lock-in is commonplace (e.g., through software such as Microsoft Office^{®} and SAP^{®}). While in these domains, RPA is often invoked as an alternative to outsourcing repetitive, low value-added operations, in the industrial domain application integrators are confronted with the heterogeneity of proprietary software systems. In response, some manufacturing companies choose to homogenize their machine fleets by using a single vendor. The GUI automation can potentially help to cope with the heterogeneity of industrial automation systems by offering a means for configuring and programming them at a meta-level.

Meanwhile, industrial robot arms are controlled by users through the HMIs, which take advantage of the GUI technology. Due to security and safety restrictions governing industrial manufacturing environments, industrial automation software, e.g. HMIs, cannot be updated as frequently and easily as other software. Hence, HMIs used in productive industrial environments often lag behind the state of the art in terms of functionality and user experience. In such environments, this situation is aggravated by the demand that innovation must yield immediate gains in productivity and profitability.

These native, vendor-provided HMIs suffer from a series of drawbacks, including:
- Limited support for modern programming languages and paradigms.
- Limited usability, accessibility, and versatility especially in the case of legacy systems.
- Limited possibilities concerning the update of firmware due to legacy hardware constraints, especially in the case of new safety and security requirements (example: the "freedrive" mode, which allows user to move the robot manually, and access to movement pane are allowed in older Universal Robots^{®} (URs) from the CB-Series^{®} while a remote connection to the robot's control PC is active; whereas, due to safety concerns, these features are locked in the newer e-Series^{®} when a remote connection is active).
- Limited possibilities concerning dynamic runtime adaptation of robot programs and behavior.

The problems mentioned above are typically solved through software updates or the complete replacement of the native robot HMI by third-party robot software and programming environments. A good example for the latter is the Robot Operating System (ROS), which is a heavyweight middleware that supports a high number of robot systems. While ROS is a de facto standard in the domain of industrial robotics, it does not solve any of the problems mentioned above in a satisfactory way because:
- ROS programs do not leverage the features that are already implemented in the vendor-provided HMI of the robot also because, due to safety concerns, newer robots do not allow programming the robot using the teach pendant while a remote connection to the robot is active.
- ROS programs use an API developed for autonomous robot functions (e.g., algorithmic path planning with obstacle avoidance and connectivity to other robots and machines) rather than for human-robot interaction.
- It requires advanced programming skills in C++ and/or Python, which factory employees typically do not have.
- It does not provide better HMIs in terms of usability, accessibility, and versatility; nor does it provide explicit support for multi-modal) human-machine interaction (e.g., using voice commands, gestures, or manual "freedrive" of the robot) .
- It does not offer any domain-specific safety and security features.

Another way of programming and controlling industrial robots is offline programming using so-called generalized robot programming tools, such as RoboDK^{®} or "Drag & Bot^{®}". These are PC-based tools that can be used to program a wide range of robots using a common proprietary program model and robot-specific simulators. The programs thus created can be translated into the robot-specific proprietary programming languages and downloaded to the robot. RoboDK, for example, uses a graphical-textual program model, which is more complex than those implemented in vendor-provided robot HMIs and thus requires an advanced technical level to use. The simulator also requires an advanced understanding of the program and robot models. Generalized robot programming tools do not solve the problems mentioned above in a satisfactory way because:
- Once downloaded to the robot, programs created using generalized robot programming tools cannot be adapted at runtime. Any change requires users to download a new version of the program to the robot, stop the running program and start the new program version.

- While online programming is also supported for some robots, it suffers from the same drawbacks as ROS programs.
- RoboDK and similar tools use proprietary graphical-textual programming models, which are not designed for usability and shop floor use.
- These program models do not provide object-oriented or other more advanced programming features, which would allow runtime adaptation (e.g., through reflection or interface-based programming).
- They can induce vendor lock-in because they are proprietary and to not offer access to the source code.

Therefore, industrial users are dependent on the vendor-provided software updates or other third-party software vendors to solve the problems mentioned above.

### Summary of the Invention

Accordingly, it is one of the objectives of the present invention to provide a method and system for providing an enhanced human-machine interface (HMI) for controlling a robot.

Accordingly, a computer-implemented method for providing an enhanced human-machine interface (HMI) for controlling a robot is provided. The method comprises at least the steps of:
monitoring a manipulation input by a user for an operation of the robot on the enhanced HMI, which is enhanced from a proprietary HMI proprietary to the robot;
generating a first program in a first program environment for the enhanced HMI in response to the monitored manipulation;
retrieving action information relating to actions to be performed as part of the operation of the robot, wherein the actions are defined in a second program environment for the proprietary HMI;
generating a second program in the second program environment corresponding to the first program by using the retrieved action information; and
controlling the robot to perform the operation using the second program.

The term "graphical user interface (GUI)" means a form of user interface that allows users to interact with electronic devices through graphical icons and audio indicators, instead of text-based user interfaces, typed command labels or text navigation.

The term "robotic process automation (RPA)" means a form of business process automation technology based on metaphorical software robots (bots) or on artificial intelligence (AI)/digital workers. RPA is sometimes referred to as software robotics (not to be confused with robot software).

The term "human-machine interface (HMI) automation" means an interface manipulated by a human, which is equipped with a functionality of automation (or emulation) of the manual user actions required to control or program a machine.

In this description, the term "HMI automation" may be replaced with at least one of terms "GUI automation" and "RPA".

The present disclosure focuses on collaborative industrial robots (cobots), which pose challenges for application integrators (i.e., manufacturing companies using them for productive purposes) in terms of safety, security, flexibility, adaptability and interoperability. Nevertheless, the proposed approach is applicable to any automation system that can be operated and/or programmed via its proprietary or non-proprietary HMI.

Currently, there exist two approaches to extending the functionality of cobots: vendor-provided plugins (e.g., through robot skill stores like UR+^{®} and Franka World@) and robotic middleware. Vendors often provide plugins in app stores for extending the functionality of robot HMIs. However, the business models of these robot vendors build on selling costly, hardware-specific extensions or apps. Such restrictive, business-oriented strategies are an important impediment to the wider adoption of cobots by industry, especially small manufacturing companies. By contrast, most cobot vendors provide open low-level APIs that can be used to develop ROS (Robot Operating System) drivers. ROS is a popular open source robotic middleware that is supported by many robot vendors and users who regularly contribute new packages and drivers. ROS provides a generalized robot programming framework with applications that are easily portable from one robot to another. The robotic middleware approach has proven useful in research and experimental development contexts, where software need not reach a high maturity level. Yet, in an agile, result-oriented industrial environment, the advantages of ROS do not hold in all circumstances. Generic and reusable components, such as ROS drivers, are generally developed with autonomous robotic systems in mind, in which a combination of teaching and offline programming is rarely supported. Using offline and remote programming sacrifices some of the important programming capabilities and features available to users through the robots' HMI (notably safety, security, reliability, and teach-in). In addition, robot skills emulating manual assembly operations cannot cover all variants of any assembly operation (e.g., screwing, transportation) and can thus prove unfeasible in practice. This situation reveals a technology gap with respect to extending existing robot HMIs in an agile and pragmatic way.

In this description, the HMI automation is understood, for example, as a specific set of tools and techniques which leverage machine learning algorithms to process the visual elements on graphical user interfaces (GUI) and to react to specific events and conditions defined by users. The HMI automation thus enables the extension and enhancement of GUIs by providing additional functionality, for example, to automate routine and repetitive tasks. As opposed to other GUI automation techniques, commonly used in software testing, the HMI automation has already proven successful in the software testing and in the business and public administration domains, which are determined by vendor lock-in concerning leading proprietary software suits. The key technology that enables HMI automation's success may be represented by machine learning-supported image processing and recognition. Embodiments of the present disclosure may also take advantage of these benefits of HMI automation.

In the industrial domain, HMI automation is not yet used to enhance the HMI and functionality of programmable production machines such as robots, automated guided vehicles, conveyors, etc.

The present disclosure proposes a novel application of HMI automation in the industrial robotics domain in the following ways.
(1) By employing HMI automation (i.e., GUI automation or RPA) tools and techniques according to the present disclosure to facilitate the use of modern programming languages and paradigms to control and program robots by providing model-based mechanisms for emulating and automating human tasks in the HMI using software robots (SRs). Software robots are background computation processes or threads, which monitor graphical user interfaces using computer vision algorithms and react to detectable changes in those interfaces by emulating user interactions (i.e., mouse actions, keyboard inputs, touchscreen or touchpad actions, etc.) autonomously.
(2) By employing HMI automation tools and techniques according to the present disclosure to enhance existing robot HMIs, including legacy HMIs, by enabling additional modes of interaction, including speech and gesture-based robot programming and control. This improves the usability, accessibility, and versatility of HMIs.
(3) By leveraging HMI automation tools and techniques according to the present disclosure to provide additional safeguards for robot HMIs, which facilitate the fulfilment of new safety and security requirements without the need of a vendor-provided firmware update. This is useful especially in the case of legacy robotic systems, for which firmware updates are no longer provided by vendors.
(4) By leveraging HMI automation tools and techniques to provide model-based dynamic runtime adaptation of robot behavior by emulating and automating human tasks in the HMI through SRs.

In some advantageous embodiments, variants, or refinements of embodiments, the proprietary HMI is a robot-specific HMI provided by a vendor for the robot, and the enhanced HMI is an HMI common to a plurality of robots provided by an automation apparatus.

In some advantageous embodiments, variants, or refinements of embodiments, the manipulation is input by the user via a physical teaching pendant, PTP, of an automation apparatus including a physical proprietary HMI and a physical enhanced HMI, wherein the manipulation is monitored on a virtual teaching pendant, VTP, of the automation apparatus including a virtual proprietary HMI and a virtual enhanced HMI, and wherein the VTP replicates all displays and functions of the PTP.

In some advantageous embodiments, variants, or refinements of embodiments, the controlling the robot includes propagating the second program from the VTP to the PTP such that the PTP controls the robot.

In some advantageous embodiments, variants, or refinements of embodiments, the controlling the robot includes controlling the PTP using the VTP based on a remote viewing and control technology.

In some advantageous embodiments, variants, or refinements of embodiments, the monitoring of the manipulation is performed based on an image processing for image comparison and/or image recognition on the PTP and the VTP.

In some advantageous embodiments, variants, or refinements of embodiments, the monitoring of the manipulation is performed based on a machine learning technology, for example by a trained artificial intelligence entity such as a trained artificial neural network or decision trees (e.g., random forest) .

In some advantageous embodiments, variants, or refinements of embodiments, the operation is defined in the enhanced HMI, and the operation entails a combination of a plurality of actions.

In some advantageous embodiments, variants, or refinements of embodiments, the operation is displayed to be manipulated by the user on the enhanced HMI, and is not displayed on the proprietary HMI.

In some advantageous embodiments, variants, or refinements of embodiments, the first program environment is configured to activate a function defined in a second program environment.

In some advantageous embodiments, variants, or refinements of embodiments, the function is an input of an input signal on at least one of buttons displayed on a graphical user interface, GUI, of the proprietary HMI, and/or an input of textual input to the GUI of the proprietary HMI.

In some advantageous embodiments, variants, or refinements of embodiments, the manipulation has an input type of at least one of a voice, a gesture or a brain wave.

In some advantageous embodiments, variants, or refinements of embodiments, the first program and the second program include a plurality of software robots (SRs).

The invention also provides, according to a second aspect, an apparatus configured to perform the method according to any embodiment of the first aspect of the present invention. The apparatus may in particular comprise an input interface, a computing device and an output interface.

The computing device may be realized in hardware, such as a circuit or a printed circuit board and/or comprising transistors, logic gates and other circuitry. Additionally, the computing device may be at least partially realized in terms of software. Accordingly, the computing device may comprise, or be operatively coupled to, a processor (one or more CPUs and/or one or more GPUs and/or one or more ASICs and/or one or more FPGAs), a working memory and a non-transitory memory storing a software or a firmware that is executed by the processor to perform the functions of the computing device. Signals may be received by the input interface and signals that the processor of the computing device creates may be outputted by the output interface. The computing device may be implemented, at least partially, as a microcontroller, an ASIC, an FPGA and so on.

The invention further provides, according to a third aspect, a non-transitory computer-readable data storage medium comprising executable program code configured to, when executed by a computing device, perform the method according to any embodiment of the first aspect.

The invention also provides, according to a fourth aspect, a computer program product comprising executable program code configured to, when executed by a computing device, perform the method according to any embodiment of the first aspect.

The invention also provides, according to a fifth aspect, a data stream comprising, or configured to generate, executable program code configured to, when executed by a computing device, perform the method according to any embodiment of the first aspect.

### Brief description of the drawings

The invention will be explained in yet greater detail with reference to exemplary embodiments depicted in the drawings as appended.

The accompanying drawings are included to provide a further understanding of the present invention and are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs. In particular, several or even all of the method steps may be performed simultaneously, in an overlapping way or sequentially.
- Fig. 1: shows a mechanism and architecture of an automation apparatus 100 according to the present disclosure.
- Fig. 2: shows a schematic flow diagram illustrating a computer-implemented method according to the first aspect of the present invention.
- Fig. 3: shows an example of Common Interface for generalized Robot Programming (CIRP) according to the present disclosure.
- Fig. 4: shows an example of procedure for generating a robot program for a proprietary robot HMI using a generalized robot programming environment according to the present disclosure.
- Fig. 5: shows an example robot program created in a non-proprietary programming environment according to the present disclosure.
- Fig. 6: shows an example of a robot program generated from the RPA model in Universal Robot's graphical programming environment according to the present disclosure.
- Fig. 7: illustrates the result of the process depicted in Fig. 4.
- Fig. 8: shows an example of RPA-based generator of a robot-specific loop structure according to Fig. 7.
- Fig. 9: shows an example of result of generation the robot-specific program corresponding to Fig. 7 and Fig. 8.
- Fig. 10: shows an example of Universal Robot (UR) HMI tab for manual robot control according to the present disclosure.
- Fig. 11: shows an example of structure illustrating procedure of controlling robot using enhanced HMI according to the present disclosure.
- Fig. 12: shows an architecture of the "Programming by Voice" extension to a robot's HMI according to the present disclosure.
- Fig. 13: shows an example of screen configuration for speech recognition using a speed recognition capable internet search engine and RPA-enabled robot programming by voice according to the present disclosure.
- Fig. 14: illustrates this use case within the scope of the present disclosure.
- Fig. 15: shows an example of robot control using decision tables and image recognition according to the present disclosure.
- Fig. 16: shows an example of RPA model monitoring four regions of a multi-display and executing a program associated with the recognition of a certain pattern according to the present disclosure.
- Fig. 17: shows a block diagram schematically illustrating an apparatus according to an embodiment of the second aspect of the present invention;
- Fig. 18: shows a block diagram schematically illustrating a computer program product according to an embodiment of the third aspect of the present invention; and
- Fig. 19: shows a block diagram schematically illustrating a data storage medium according to an embodiment of the fourth aspect of the present invention.

### Detailed Description of the invention

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

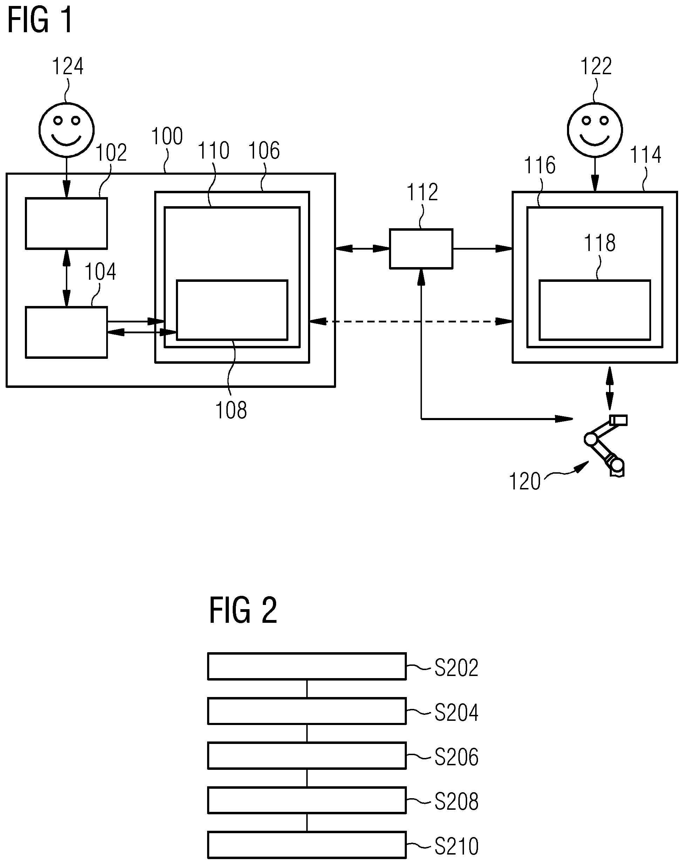

Fig. 1 shows a mechanism and architecture of an automation apparatus 100 according to the present disclosure. The automation apparatus 100 according to the present disclosure may be also referred to as a HMI automation apparatus or an apparatus for HMI automation.

As shown in Fig. 1, the automation apparatus 100 may be applied to a robotic system comprising a control computer, CC, 112, a hand-held HMI 114, and a robot 120.

The CC 112 may provide an instruction to the hand-held HMI 114. The CC 112 may implement real-time control loops with the robot 120 by using sensors, actuators, etc. The CC 112 may be connected to the automation apparatus 100 through a physical cable (for example, Ethernet or USB) or another networking technology such as wireless solution.

The robot may be an industrial robot 120. The robot may also be a specific part of a robotic assembly machine, such as robot arm. The robot may be identified by their own identification stored in the automation apparatus 100.

The hand-held HMI 114 may be referred to as a physical teaching pendant (PTP) of the robot 120. The teaching pendant may be a control box for programming the motions of a robot. The PTP 114 may be an interface configured to communicate with a user by using a GUI. The PTP 114 may display information regarding the operation of robots to the user 122, and receive inputs from the user through the GUI. The PTP 114 may receive an instruction from the CC 112, and provide control logic to the robot 120 based on the instruction. For example, the control logic may be high level programs, or behaviors.

The PTP 114 may include a proprietary HMI 116 proprietary to a robot 120 and an enhanced HMI 118 enhanced from the proprietary HMI 116. The term "proprietary" may be understood synonymously and used interchangeably with term "native". The proprietary HMI 116 may be components available from robot vendors or third-party software providers. The proprietary HMI may be a robot specific HMI. The enhanced HMI 118 may be enhanced components proposed in the present disclosure. The enhanced HMI 118 may be also referred to as an extended HMI, which extends the functionality of the proprietary HMI 116. The proprietary HMI 116 and the enhanced HMI 118 of PTP 114 may be also referred to as a physical proprietary HMI and a physical enhanced HMI, respectively.

The expert user 124 may be a user responsible for managing the automation apparatus 100. For example, the expert user 124 may design, deploy and configure the automation apparatus 100. The end user 122 may be a user operating the robot 120. The end user 122 may be a customer of the automation apparatus 100. In this description, "a user" may indicate "an end user".

As shown in Fig. 1, an automation apparatus 100 according to the present disclosure may include a model designer tool 102, an execution engine 104, and a virtual teaching pendant (VTP) 106. The model designer tool 102 may be referred to as a HMI automation model designer tool, or a RPA model designer tool. The execution engine 104 may be also referred to as a HMI automation execution engine, or a RPA execution engine. The VTP 106 may include a proprietary HMI 108 proprietary to a robot, and an enhanced HMI 110 enhanced from the proprietary HMI 108. The proprietary HMI 108 and enhanced HMI 110 of VTP 106 may be also referred to as a mirrored (or replicated) proprietary HMI and a mirrored (or replicated) enhanced HMI, respectively. The term "mirror" may be understood synonymously and used interchangeably with term "replicate". Also, the mirrored proprietary HMI and mirrored enhanced HMI may be referred to as a virtual proprietary HMI and a virtual enhanced HMI, respectively. The automation apparatus 100 may be a computing device, for example, a laptop, an industrial PC, an embedded PC. The automation apparatus 100 may be a combined apparatus with PTP, but may also be a separated apparatus from the PTP.

The VTP 106 may be a virtual teaching pendant that replicates the PTP 114. Therefore, PTP 114 and VTP 106 may display identical contents. Moreover, the proprietary HMI 108 and enhanced HMI 110 of VTP 106 may mirror the proprietary HMI 118 and enhanced HMI 116 of PTP 114, respectively. The VTP 106 may host robotic process automation (RPA) software encoded on a computer storage medium. More specifically, the automation apparatus 100 may execute the hosted RPA software that monitors the VTP 106 (also referred to as "V-HMI") of the automation apparatus 100 and emulates user 122 interactions depending on preprogrammed model-based logic of interaction. The RPA software may run a plurality of computational processes and/or threads executed in parallel, which monitor a plurality of regions of interest in the V-HMI and detect changes on the GUI using computer vision algorithms. The RPA software may emulate user 122 interactions (mouse clicks, typing, touchscreen or touchpad touches, etc.) in reaction to the changes detected in the V-HMI by the parallel processes and threads of the RPA software. The enhanced HMI 110, 116 may extend the functionality of the proprietary HMI 108, 118 by using RPA software.

Using a generic connection between the CC 112 of the robot 120 and the automation apparatus 100, the view and control of the robot's hand-held HMI 114 can be mirrored on the automation apparatus 100.

The automation apparatus 100 may use a remote viewing tool (such as remote desktop protocol, VNC, etc.) supported by the vendor software (i.e., firmware or extensions running on the CC 112) to mirror and control the robot's proprietary HMI 118 of PTP 114 using the input/output devices connected to the automation apparatus 100 (e.g., monitor, mouse, etc.).

The automation apparatus 100 may use the execution engine 104 (e.g., SikuliX, PyAutoGUI, UIPath^{®}, etc.) and provide an model designer tool 102, which expert users 124 employ to develop automation models (also referred to as HMI automation models, or RPA models) in a plurality of programming languages and models. The automation model may be a model generated by the model designer tool 102 to automate a process of configuring for a machine operation. In this description, the automation model may be also referred to as an RPA model. Possible embodiments of the automation model may include visual (i.e., graphical) or textual workflows, visual or textual computer programs, rule-based decision logic, message bus integration logic, Supervisory Control And Data Acquisition (SCADA) system integration logic, Manufacturing Execution System (MES) system integration logic, etc.

The model designer tool 102 may generate and manage automation models comprising software robots (SRs), which are components that can be executed by the execution engine 104. An automation model may be composed of one or several SRs, which can communicate with each other using a shared memory, a message bus, or a service layer.

An SR may monitor the mirrored HMI 108, 110 for the robot 120, embodied as the VTP 106, using the image processing tools and methods implemented by the execution engine 104. The execution engine 104 may use specialized graphics libraries (for example, OpenCV) and machine learning algorithms and models for image comparison and recognition. The execution engine 104 may provide mechanism for handling events observed in the VTP 106 (e.g., a user 122 click or tap on a certain button, a certain image representing a new button or graphical element appears or disappears from the screen, a user 122 performs a certain action observable through a visual state change, etc.), upon which one or a plurality of SRs can react individually or in a concerted way. The automation model may specify the generic and/or specific mechanism with which composing SRs should react to different visual events in the VTP 106 (i.e., state changes). For example, an automation model may use an "if-this-then-that" logic (IFTTT) to perform certain actions upon detecting certain visual state changes in the HMI 108, 110 determined by user 122 or robot actions. For example, if the user 122 activates a certain visual pane in the VTP 106, the execution engine 104 may perform a series of further actions automatically (e.g., clicks on certain visual elements, textual inputs, etc.), as defined by a SR, or prevent the user 122 from performing additional actions that are not allowed for certain user roles or in particular contexts, as determined by the HMI automation model.

When the automation model defines a certain reaction to an observable visual state change, the execution engine 104 (or SR) may manipulate the VTP 106, for example, by emulating user click or tap events on certain buttons or tabs; or by entering information in designated text fields; or by automatically selecting options or records in a list; etc. The automation model may specify the logic through which one action leads to a model state change, which requires the automated manipulation of the VTP 106 by a SR so as to align the model state with the visual state of the HMI 108, 118.

Any manipulation of the VTP 106 by the execution engine 104, as specified by one or a plurality of SR(s), which are part of one or a plurality of automation model(s) being executed will automatically have the same effects upon the PTP 114 manipulated by the end user 122. This dual manipulation mode of essentially the same visual state by two different agents may be implemented by using a mutually exclusive logic. According to an embodiment of the present disclosure, the automation apparatus 100 may act like a 'co-operator' or second operator assisting the robot operator (or end user). This may be regarded as a dual robot manipulation modality. The mutually exclusive logic may ensure that the VTP 106 is only manipulated by SRs and automation models through the execution engine 104; and that the PTP 114 is only manipulated by the end user or its state is only changed by the robot 120 being controlled by the end user 122 using the PTP 114. For example, different robot movements will change different numerical values displayed in the PTP 114, for example, joint angles or the tool center point position-whereby these changes are instantaneously mirrored in the VTP 106.

Using automation models, SRs, the execution engine 104, the VTP 106 and the remote connection to the CC 112, enabled by third party remote viewer software tools, the automation apparatus 100 provides a seamless HMI Safeguard and Extensions layer, which provides the end user 122 with additional features or can remotely manipulate the robot 120 in non-intrusive ways.

In some embodiments of the present disclosure, the automation model enables the end user 122 to manipulate the VTP 106 using, for example, voice commands. The user 122 is able to manipulate the VTP 106 with voice commands for a specific response, which can be achieve by manipulating PTP 114 using the vendor provided means of interaction (e.g., touch pad interaction). For example, it may be allowed that the end user 122 triggers a command by voice, while manually manipulating the PTP 114 or the robot 120. The end user 122 may use other modes of interaction with the VTP 106 (e.g., using voice, gestures, or brain waves) while using the vendor-provided modes of interaction with the PTP 114 and the robot 120. In this way, the automation apparatus 100 may help to significantly enhance the capabilities of the PTP 114, which can be endowed with a microphone, camera, and/or other sensors connected to the automation apparatus 100 according to the present disclosure and installed on the PTP 114 in a non-intrusive way.

The automation apparatus 100 may entirely replace some of the current roles of end users 122, by automating the tasks they would have to manually perform using the PTP 114 in order to achieve the same results. These tasks primarily include programming the robot using the PTP 114 but may also include the configuration of the robot as well as monitoring its actions and performance.

The automation apparatus 100 may only monitor the PTP 114 (through the VTP 106) and react to certain visual states of the PTP/VTP (henceforth simply referred to as teaching pendant - TP) in order to improve the safety and security of the TP by enhancing it with additional safeguards, especially when certain versions of the HMI software of the TP cannot be upgraded to the latest vendor software version due, for example, to legacy hardware issues or other technical constraints.

More specifically, the result of monitoring the VTP 106, which replicates the display of the PTP 114 precisely and in real time using remote viewing and control technology is that the RPA models trigger actions upon the VTP 106, which are propagated using the same remote viewing and control technology in real time to the PTP. Any user interaction with the VTP performed by a user or by an RPA model will be replicated by the automation device automatically and in real time in the PTP. In addition, any user interaction with the PTP 114 can be monitored in real time on the VTP 106. Consequently, in an embodiment of the present disclosure, the automation apparatus 100 could be a device (e.g., EDGE computer device) that is connected to the robot, whereby the end user does not need to interact with this device at all in all of the examples provided, with the exception of the voice programming, where the end user interacts with a microphone connected to the device.

In the present disclosure, the automation models may be provided, which allows the dynamic adaptation of the behavior of the robot 120 by modifying existing programs stored in the teaching pendant's HMI software and restarting them without the need of human intervention. Other automation models may dynamically adapt the behavior of the robot at runtime, for example, by pausing or stopping program execution, modifying or replacing programs, and restarting execution depending on external conditions.

Meanwhile, an automation model may, for example, also be used to generate a robot program from one possibly non-proprietary robot program model into another, possibly proprietary program model. The automation models may be based on a plurality of programming models, such as IFTTT, workflows, object and aspect oriented programs.

According to the present disclosure, the benefits may be achieved as described below:
- The HMI can be extended in a nonintrusive way without altering the source code of the prprietary HMI 118 of the robot 120, which is usually not available to users 122. This allows the extension of the useful life of industrial robots, which would otherwise need to be replaced sooner due to software upgrade issues.
- Through the extensions and adaptations facilitated by HMI automation, the HMI can be tailored for new user groups and usage scenarios. For example, it is possible to add voice-based programming features and other kinds of accessible modes of interaction with the HMI.
- It provides additional programming language support for developing functional extensions to the HMI.
- It provides nonintrusive mechanisms for the dynamic runtime adaptation of robot behavior.
- It helps to improve the safety and security of outdated robot HMIs.

Fig. 2 shows a schematic flow diagram illustrating a computer-implemented method according to the first aspect of the present invention, e.g. a method for providing an enhanced human-machine interface, HMI, for controlling a robot. The procedures described in Fig. 2 may be executed by an automation apparatus 100, as described with respect to Fig. 1.

In step S202, a manipulation input by a user 122 for an operation of a robot 120 on the enhanced HMI may be monitored. The enhanced HMI 110 may be enhanced from a proprietary HMI 108 proprietary to the robot 120. The manipulation may have an input type of at least one of a voice, a gesture or a brain wave. The manipulation may be input via a GUI of the enhanced HMI. The user 122 may be an operating user of the robot 120.

The manipulation may be input by the user 122 via a physical teaching pendant, PTP, 114 of an automation apparatus 100 including a physical proprietary HMI 118 and a physical enhanced HMI 116, and the manipulation is monitored via a virtual teaching pendant, VTP, 110 of the automation apparatus 100 including a virtual proprietary HMI 108 and a virtual enhanced HMI 110, wherein the VTP 106 replicates all displays and functions of the PTP 114.

Monitoring the manipulation may be performed based on an image processing for image comparison and/or image recognition on the PTP 114 and the VTP 106. Monitoring the manipulation may be performed based on at least one of a machine learning technology and a remote viewing and control technology.

The proprietary HMI 108, 118 is a robot-specific HMI provided by a vendor for the robot 120, and the enhanced HMI 110, 116 is an HMI common to a plurality of robots provided by an automation apparatus 100.

In step S204, a first program in a first program environment for the enhanced HMI may be generated in response to the monitored manipulation. The first programming environment may be a generalized robot programming environment, a common robot programming environment, or a non-proprietary robot programming environment. The first program may be an RPA model (or HMI automation model) generated in a non-proprietary programming environment.

In step S206, action information relating to actions to be performed as part of the operation of the robot may be retrieved. The actions may be defined in a second program environment for the proprietary HMI. The second programming environment may be a proprietary robot programming environment. The action information may be generated by the expert user 124, or generated by automatically in the automation apparatus 100. The action information may be stored in a library located in the automation apparatus 100.

The first program environment is configured to activate a function defined in a second program environment. The function may be inputting an input signal (such as, click or tapping) on at least one of the buttons displayed on a graphical user interface, GUI, of the proprietary HMI, and/or an input of textual input to the GUI of the proprietary HMI.

The operation mentioned in step S202 may be defined in the enhanced HMI, and the operation may entail a combination of a plurality of actions. The operation may be displayed to be manipulated by the user 122 on the enhanced HMI, and may be not displayed on the proprietary HMI. However, the operation may also be defined in the proprietary HMI.

In step S208, a second program in the second program environment corresponding to the first program may be generated using the action information. The second program may be a RPA model (or automation model, or HMI automation model) which is generated in the proprietary programming environment.

In step S210, the robot 120 may be controlled to perform the operation using the second program. The first program and/or the second program may include a plurality of software robots executed by the HMI automation model, which may further enhance the performance of the second program and/or the behavior of the proprietary HMI without being visible to the end user of the proprietary HMI.

According to an embodiment of the present disclosure, the robot may be controlled by propagating the second program from the VTP to the PTP such that the PTP controls the robot. The robot may be controlled by controlling the PTP using the VTP based on a remote viewing and control technology.

Hereinafter, an embodiment of a generalized robot programming according to the present disclosure is described. The generalized robot programming may be also referred to as a non-proprietary robot programming, or a common robot programming, which is common to a plurality of robots. The generalized robot program may utilize model-based automated program generation in the robot's native format.

Most industrial robot vendors provide (1) proprietary executable program formats and (2) proprietary scripting languages which can be used to program robots. Proprietary executable program formats are used in the robot's hand-held HMI and represent the primary way in which industrial robots are being programmed. And, although, programming using the robot's HMI is usually slower, less intuitive, and limited with respect to the interoperability with other libraries and systems, it is still the preferred way to program robots because it is closest to how the vendor envisioned the use of such robots in productive environments (e.g., factories). Especially in safety-relevant, productive applications, safety certifications are carried out on the basis of programs edited using the robot's HMI. This way, both the certification consultant and the application integrator (i.e., the organization using it productively) can share a common knowledge base facilitated by transparent application programs written using the robot's HMI while minimizing the potential sources of uncertainty that may arise from using more complex scripting languages, generated by or integrated into possibly even more complex third-party applications.

Industrial robot users are also faced with the problem of having to manage and maintain robot programs in different vendor and version-specific formats. This induces vendor lock-in since organizations attempt to reduce complexity by using only a limited number of different robot types from a single maker in order to maintain backward compatibility with existing applications and training programs. Heavyweight robotic middleware frameworks, such as ROS, aim at generalizing robot programming by providing drivers for a high number of robot types. Yet, many industrial users prefer the robots' proprietary programming languages and interfaces because they are more reliable and there exists customer support for them. Also, when using ROS, application developers are faced with a high configuration overhead and other issues related to open source software, which does not provide any warranties, while losing the benefits of using the robot's proprietary algorithms (e.g., for path planning), which are usually faster and more efficient than those compatible with ROS (e.g., MoveIt, Open Motion Planning Library - OMPL). Other problems arising from using ROS and other third-party generalized robot programming frameworks (e.g., like "Drag & Bot" or RoboDK) are related to the poor interoperability with the robot's teach-in functionalities (i.e., the ability to manually drive the robot to a desired position and memorize waypoints). According to the present disclosure, the problems described above may be solved.

In this description, means for generating programs in the robot's proprietary format from other programming languages and models in a simple and transparent way are provided. The means enable application integrators to certify human-robot applications on the basis of application programs available in the robot's native format; while, at the same time, developing and maintaining a robot application code base in another, robot-independent programming language. To facilitate this, the invention provides mechanisms for translating code written in a programming language of choice into the robot's native format by using RPA tools and methods.

In the following examples, a robot independent model-based programming environment, such as "Blockly" or "Assembly", from which programs can be generated for the robot's proprietary HMI may be considered. Such environments use different representation for programs (e.g., XML), which can be easily parsed by a code generator for model designer tools such as SikuliX or PyAutoGUI. Other program representations and languages can also be used but, as opposed to XML-based program representations, non-structured textual program code needs to be parsed using regular expressions or similar methods.

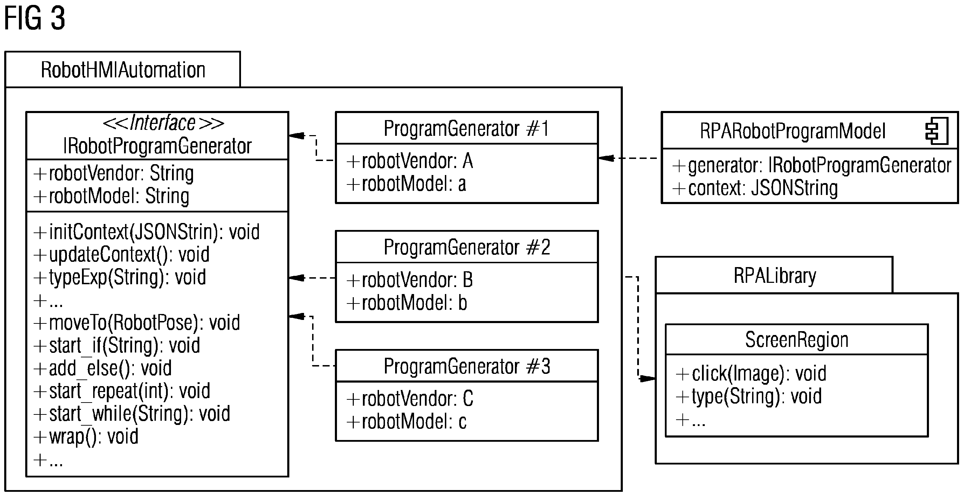

Fig. 3 shows an example of Common Interface for generalized Robot Programming (CIRP) according to the present disclosure.

As shown in Fig. 3, the CIRP is related to at least one of (1) a plurality of robot program generator classes, components, or modules; (2) a generic GUI automation (or RPA) library; and (3) an RPA robot program model.

In Fig. 3, a unified modeling language (UML) diagram, in particular a class diagram, of the software components that are used in the present disclosure is demonstrated. A package RobotHMIAutomation, which contains a CIRP called IRobotProgramGenerator as well as several implementations of that CIRP can be provided as part of an embodiment of the present disclosure. The CIRP specifies a series of required fields and methods that need to be provided or implemented by any robot-specific program generator class, module, or component. An example of such a module may contain Python code and graphical files, which represent visual patterns displayed in the hand-held HMI that can be recognized by RPA engines and software robots. In Fig. 3, the dependency of the RobotHMIAutomation package on an external RPA library is explicitly illustrated using a dashed UML dependency arrow.

In order for an embodiment of the present disclosure to be feasible, the RPA library used by the RobotHMIAutomation package should at least provide a click (Image), a type (String) function, and supporting real time image recognition capabilities. A call to a click (Image) function determines the HMI automation engine to emulate the user action required to perform a left-mouse click or, in the case of touch screens and touch pads, a tapping or pressing upon the graphical element specified by the provided image parameter. These graphical elements are specific to the proprietary robot programming environment for which the present disclosure can be used to generate robot programs. They should thus be considered as being inherent components of any implementation of the CIRP and should be packaged together with that implementation.

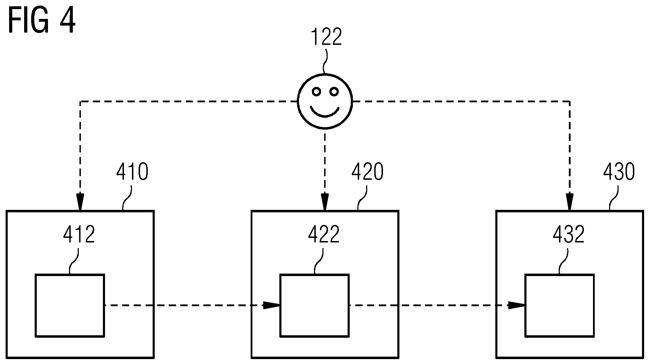

Fig. 4 shows an example of procedure for generating a robot program for a proprietary robot HMI using a generalized robot programming environment according to the present disclosure.

In Fig. 4, a user 122 generates an RPA model 412 in a non-proprietary environment 410. And the user 122 exports the RPA model 412 to an RPA environment 420. After that, the user uses the RPA model 412 within an RPA environment 420 (GUI automation) to generate a robot program 432 for a proprietary robot programming environment 430 and then to visually check and test the resulting program in that programming environment. For the purpose of providing a clear description of the method, in this example, it may be regarded that the transitions from one environment to another are enacted by the user 122.

However, in an embodiment of the present disclosure, this process may be performed automatically, e.g. as a service running on the automation apparatus 100 which also hosts the HMI automation execute engine 104 as well as all the necessary components and libraries described in the present disclosure. The service may then be triggered by the user in the non-proprietary robot programming environment, which results in a program being generated in the target proprietary robot programming environment.

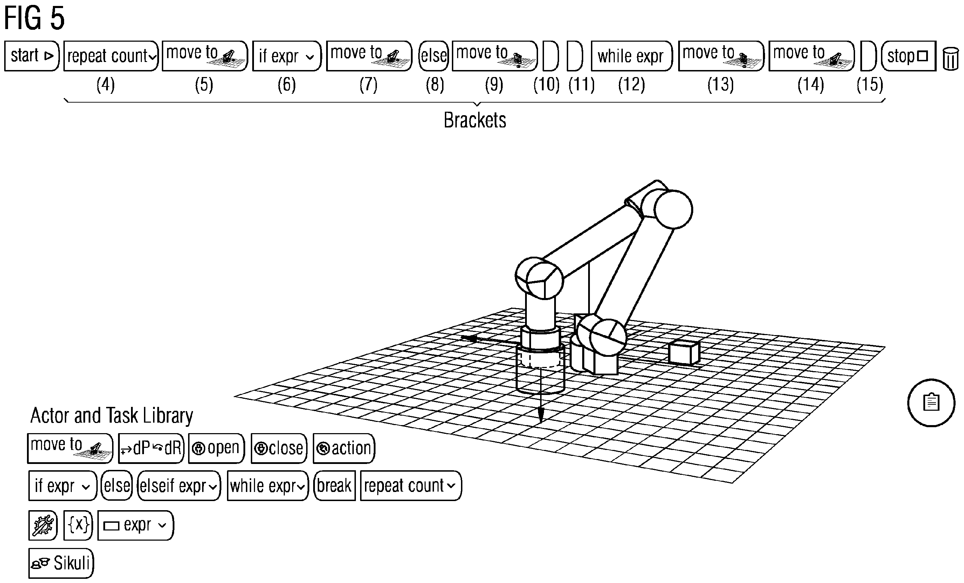

Fig. 5 shows an example robot program created in a non-proprietary, open source graphical robot programming environment according to the present disclosure. The robot programming in this embodiment may be implemented by, for example, "Assembly" or "Blockly".

In Fig. 5, the numbers in brackets refers to the corresponding code lines in Table 1 described below.

Fig. 5 shows an example robot program created using a non-proprietary, block-based graphical robot programming environment. This environment may be used here just as an example. Any other existing robot programming environment having code generation capabilities can be used instead. In this example, the robot program is represented as a sequence of blocks with references to variables that can be edited using an editor (not shown). When clicking on the encircled clipboard icon, an RPA model corresponding to the robot program is generated and copied to the clipboard. The user 122 must then switch to the RPA tool and paste the content of the clipboard into a new script window.

According to an embodiment of the present disclosure, a service hosted on the automation apparatus 100 may be provided, which automates the manual steps of copying, pasting, and triggering the RPA model in the procedure illustrated in Fig 4.

Table 1 shows an example of a RPA robot program model according to the present disclosure. This RPA robot program model may be exported by using the "Assembly" robot programming environment depicted in Fig. 5 and thus corresponds to the block-based robot program depicted in Fig. 5.

**[Table 1]**

| | |
|---|---|
| 1 | # -*- coding: utf-8 -*- |
| 2 | from URProgramGenerator import |
| 3 | initContext(); |
| 4 | start_repeat("5"); |
| 5 | moveTo (-150.00, -150.00, 50.00, 0.00, -180.00, 0, 0.05, 0.05) |
| 6 | start_if("Robot.tcp.x + 150 < 0.01"); |
| 7 | moveTo (-200.00, -100.00, 50.00, 0.00, -180.00, 0, 0.05, 0.05); |
| 8 | add_else(); |
| 9 | moveTo (-210.00, -100.00, 50.00, 0.00, -180.00, 0, 0.05, 0.05); |
| 10 | wrap(); |
| 11 | wrap(); |
| 12 | start while("Robot.tcp.x + 150 < 0.01"); |
| 13 | moveTo (-150.00, -150.00, 50.00, 0.00, -180.00, 0, 0.05, 0.05); |
| 14 | moveTo (-200.00, -100.00, 50.00, 0.00, -180.00, 0, 0.05, 0.05) |
| 15 | wrap(); |

Table 1 is an example of non-proprietary robot-specific program model generated by using the procedure depicted in Fig. 4. In an embodiment of the present disclosure, a component built on top of the RPA environment could automatically determine which generator class to be used. In this case, the generated RPA program model would be completely robot-independent, as it would only make reference to the CIRP. In other words, only code line number 2 is robot-dependent; all the other code lines are robot-independent. To implement a robot-independent embodiment, one can use the "factory" design pattern to instantiate the robot-specific code generator.

It may be assumed that the RPA model was copied and pasted by the user. To generate a program in the robot's proprietary HMI, the user needs to click on a "Run" button. However, the RPA model may be also be provided to the RPA tool automatically, e.g., by executing the latter as a service or from the command line.

The procedure of generating the RPA robot program model (non-proprietary robot program model) may be automated as part of a service provided by the automation apparatus (100) according to the present disclosure. Another possible embodiment may provide a dedicated RPA tool, which then connects to the robot and generates the program.

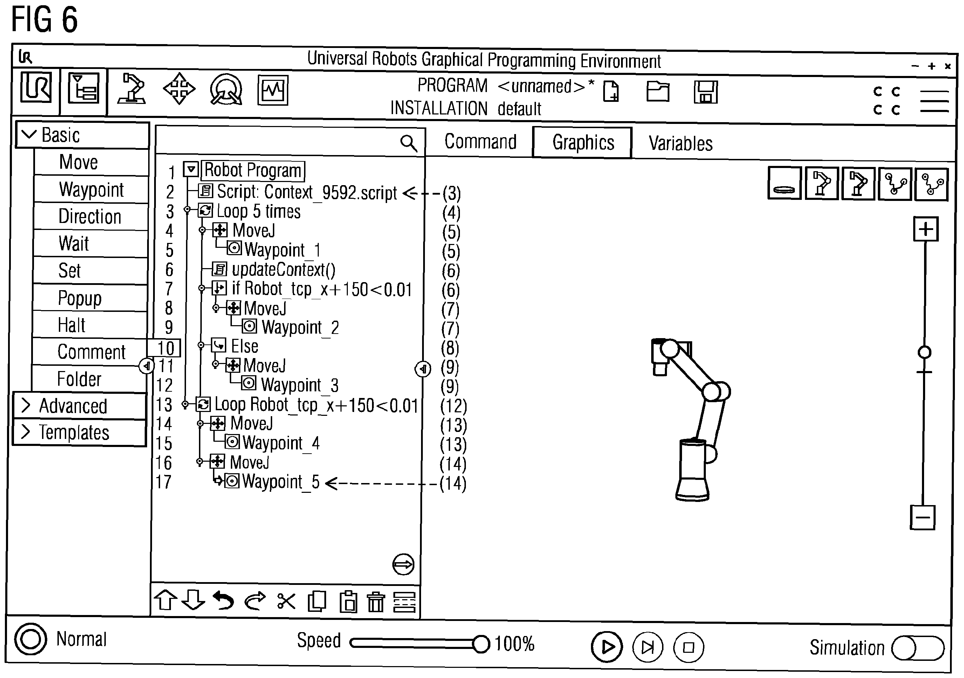

Fig. 6 shows an example of a robot program generated from the RPA model in Universal Robot's graphical programming environment called Polyscope, according to the present disclosure. The Universal Robot's graphical programming environment may be an example of a proprietary programming environment.

In Fig. 6, the numbers in red brackets correspond to the code lines in Table 1.

Fig. 6 illustrates the result of the process depicted in Fig. 4. The result is a robot program that was automatically generated by the RPA engine and thus corresponds to the RPA model from Table 1.

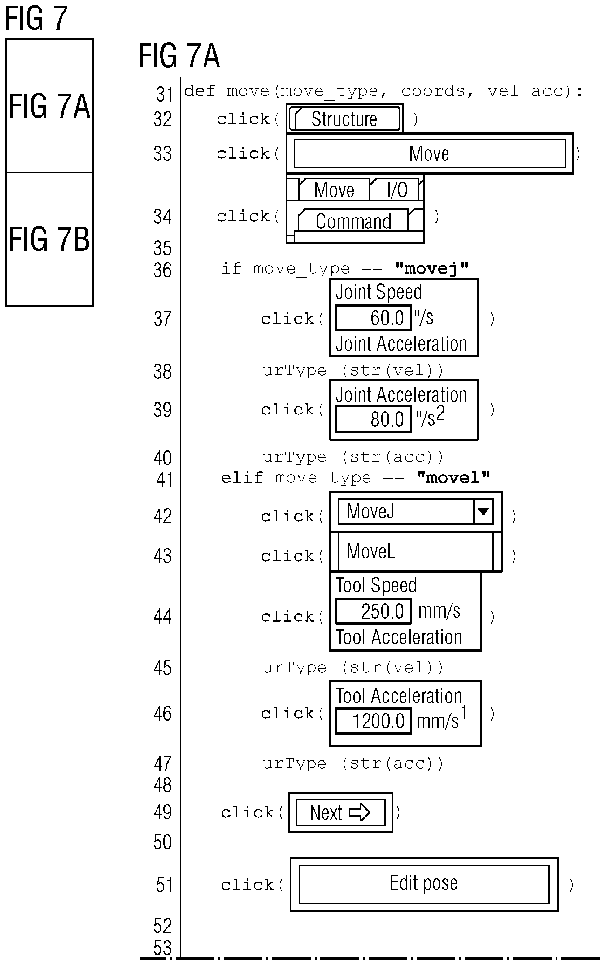

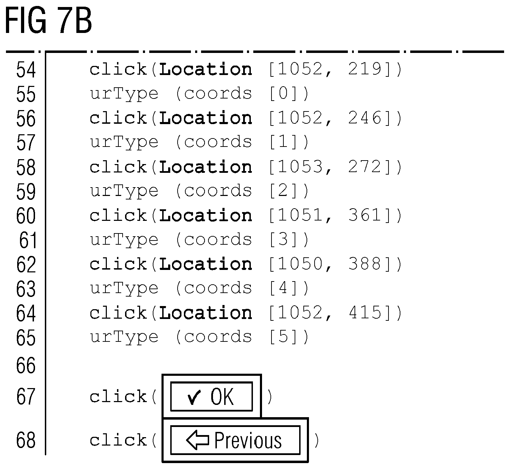

Fig. 7 shows an example of robot-specific RPA functions according to the present disclosure. More specifically, Fig. 7 (Fig. 7A and 7B) shows an example of RPA-based generator of a robot-specific move function.

The RPA-based generators are represented by parameterized GUI automation sequences (or macros), which can be recorded using a generic GUI automation software and thus do not require advanced knowledge in robotics and programming. This enables industrial robot users to develop, maintain, and commercialize an RPA code base for various robot types. The various RPA-based generators (i.e., move, loop, end as illustrated in Fig. 7) automate the actions that would otherwise need to be performed by a user manually.

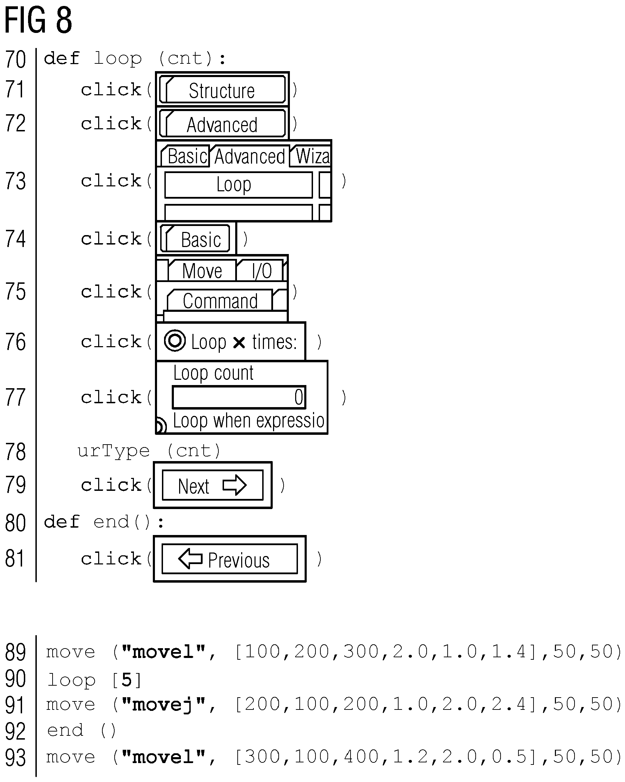

Fig. 8 shows an example of RPA-based generator of a robot-specific loop structure according to Fig. 7.

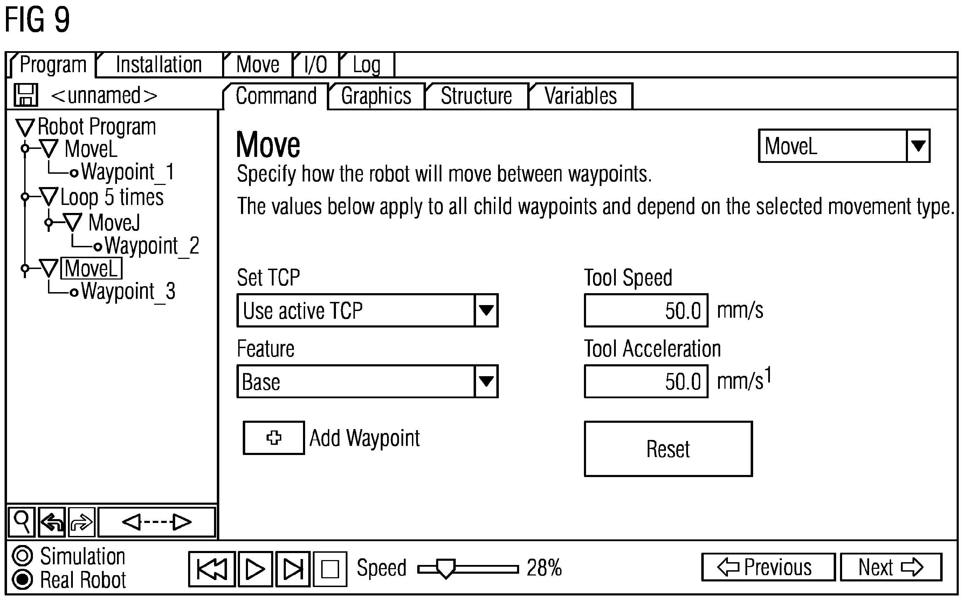

Fig. 9 shows an example of result of generation the robot-specific program corresponding to Fig. 7 and Fig. 8..

A non-binding robot-independent common interface for generalized robot programming (CIRP) can be leveraged to develop new modes of programming and interacting with robots, such as programming by voice and gestures. In addition, a CIRP allows the specification of new robot skills based on manufacturing standards.

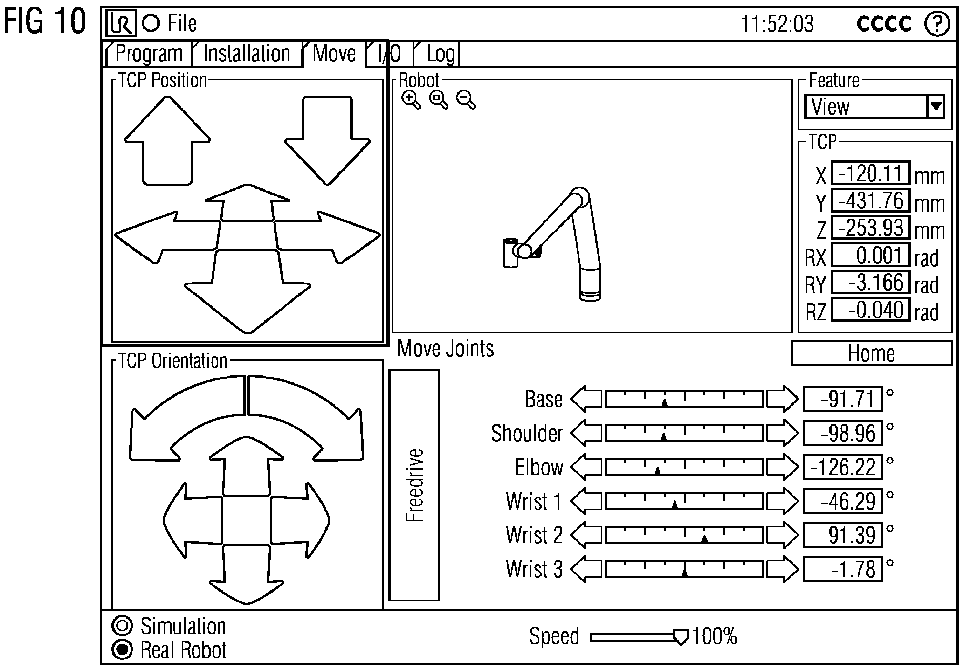

Fig. 10 shows an example of Universal Robot (UR) HMI tab for manual robot control according to the present disclosure. The region of interest monitored by the RPA engine is marked with a box.

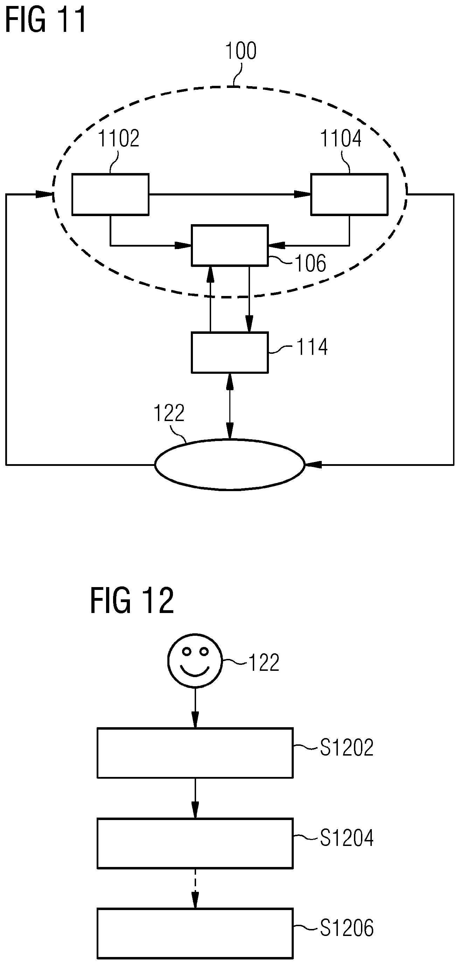

Fig. 11 shows an example of structure illustrating procedure of controlling robot using enhanced HMI according to the present disclosure.

As shown in Fig. 11, the automation apparatus 100 may include condition monitoring entity 1102, software robot 1104 and VTP 106. The condition monitoring entity 1102 may be configured to monitor manipulation input through PTP 114 by the user 122. The manipulation may be monitored on VTP 106. The condition monitoring entity 1102 may be located in VTP 106, or may be separately located from the VTP 106. The software robot 1104 may be configured to interact with VTP 106. The software robot 1104 may be configured to be notified from condition monitoring entity 1102. The software robot 1104 may provide the VTP 106 with control instruction to control the robot via PTP 114. VTP 106 may propagate the control instruction to PTP 114.

The PTP 114 may be replicated by VTP 106. Therefore, PTP 114 may be mirrored to VTP 106. PTP 114 may receive control instruction from VTP 106.

The user 122 may see and interact with PTP 114. The user 122 may receive a report from the automation apparatus 100, and input instructions into the automation apparatus 100, directly.

Hereinafter, an example of RPA-enabled robot programming by voice is described.

Fig. 12 shows an architecture of the "Programming by Voice" extension to a robot's HMI according to the present disclosure.

The architecture of the "Programming by Voice" may be extended to a robot's HMI by leveraging the techniques described through Fig. 3 to Fig. 11.

In step S1202, the user may interact with a programming by voice interface (e.g., a web application in a web browser), which uses a speech recognition Application Programming Interface (API). The voice interface may process the voice input of the user received over a microphone connected to the HMI automation module. It may then map recognized commands to existing generic robot functions defined in the CIRP (e.g., move, grasp, etc.).

In step S1204, a voice RPA model may be programmed. More specifically, when a voice command input by the end user of the robot is recognized, the RPA implementation of the respective command is invoked also using the recognized parameters.

In step S1206, the robot's HMI may be thus augmented by a new programming mode, which enables users to create tasks while keeping their hands free for manually positioning the robot. This may eliminate the need for switching back and forth between the robot and the teaching pendant. In this step, robot-specific RPA generators and SRs may be used.

For example, the following combination of voice commands can considerably increase the efficiency of programming by teach-in :
- "enable / disable freedrive" and "waypoint": The "enable freedrive" command triggers a SR which presses and keeps a "Freedrive" button pressed in a VTP and PTP until the "disable freedrive" command is issued by the user (see below). Using the HMI automation module to keep the "Freedrive" button pressed enables the user to manipulate the robot arm with both hands, e.g., to precisely move it to a desired position or pose. This operation is essential in the programming by teach-in process. When the desired position is reached, the user may issue the "waypoint" command to memorize the current robot pose. The user may then continue to use the freedrive mode (e.g., to teach or store further waypoints) or issue the "disable freedrive" command to end it.
- "joint / linear motion": In combination with the freedrive commands, this command will add a "movej" or "movel" statement to the current robot program by triggering the appropriate RPA generator(s). To do so, it first disables the freedrive mode, then adds the move command and then switches back to the "move" tab in order to re-enable the freedrive mode. This mode of operation enables the user to teach a series of robot moves by driving the robot to the desired positions, without having to use the teaching pendant. This command may also be used in combination with the "waypoint" command, which may add a waypoint to the current move operation.
- "grasp / release": These commands add a close / open gripper statement, respectively, to the current program by triggering the appropriate RPA generator(s). This command can be issued while the freedrive mode is enabled.

According to an embodiment of the present disclosure, a speech recognition capable internet search engine (right hand side) may be used for a speech recognition.

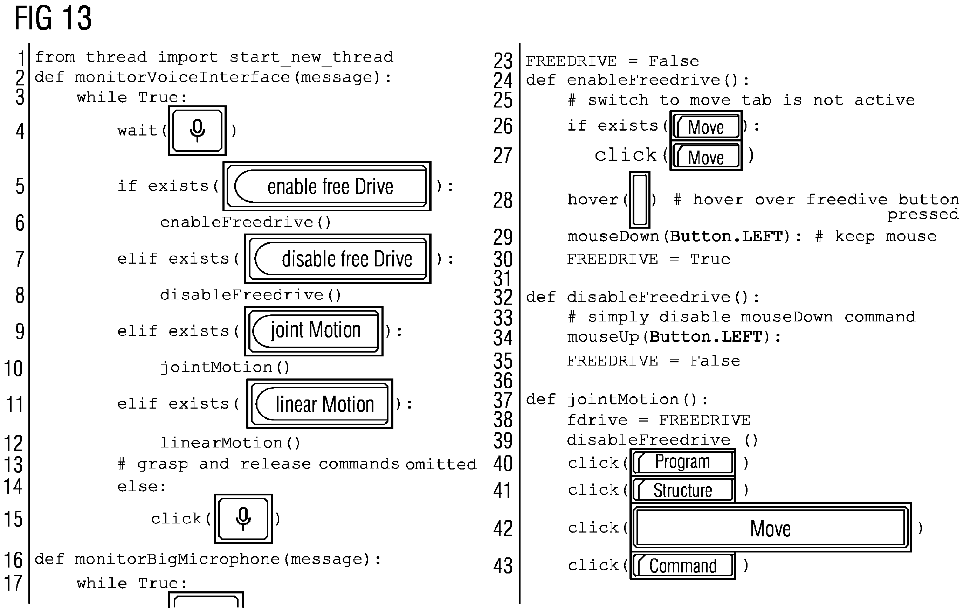

Fig. 13 shows an example of screen configuration for speech recognition using a speed recognition capable internet search engine and RPA-enabled robot programming by voice (implementation of "linearMotion") according to the present disclosure.

The two RPA monitors listed in the left-hand side of Fig. 13 (lines 4 and 18) monitor the Google Search speech recognition interface by checking for the existence of the microphone symbols (in two versions). When the first monitor recognizes and clicks the small colored microphone, the larger microphone appears, which turns grey if speech recognition is not activated. When the view with the large microphone is active, users can issue voice commands which are recognized by the speech processing software of the search engine.

Upon recognition of a command, the voice recognition interface types the textual command in the search field. The RPA monitors (lines 5-12 in Fig. 13) recognize the textual command through graphical processing of the provided graphical pattern, which corresponds to how the voice recognition interface displays a recognized command. Upon recognition of the graphical pattern corresponding to the textual representation of a recognized voice command, the matching RPA function is called. The right-hand side of Fig. 13 depicts the implementation of the different RPA functions that implement the automated functionality within the robot's HMI corresponding to the recognized voice command. The implementation of "linearMotion", which is not shown in the Fig. 13 is very similar to that of "jointMotion".

The "programming by voice" extension enabled according to the present disclosure provides an additional modality of programming cobots, which currently offer multi-modal programming environments based on haptic, mouse, and keyboard interactions. The main benefit of this approach is an increase in the productivity of cobot programmers in scenarios which require a high number of teach-in operations. Robots can thus be endowed with an additional human-robot interaction modality in a non-intrusive way, which saves up to 40% of the time needed to manually program the same operations using the robot's teaching pendant.

Hereinafter, an example of improvement of the safety and security of a robot HMI is described.

According to an embodiment of the present disclosure, an RPA Model composed of two software robots acting as additional safeguards in the two scenarios may be provided.

Collaborative industrial robots can be operated without safety fences thanks to their inherent safety features. Nevertheless, all human-robot applications are subjected to a risk assessment conducted by robot safety experts in accordance with a series of applicable norms and standards. As norms and standards are being updated to improve safety while allowing more flexibility, older versions of a collaborative robot's HMI may lack the newest standard-conforming safety features.

Scenario 1: Preventing the concomitant manual and remote manipulation of the robot.

Consider two versions of a robot's HMI having the following characteristics:
- The older version (OV) allows users to control the robot while it is also being controlled remotely through a TCP/IP connection. This represents a safety hazard because users are endangered if an external program controls the robot when they are working with the robot in direct physical contact or close proximity. In particular, there exists a concrete safety hazard when users work with the robot in "freedrive" mode, which allows them to position the robot manually to a desired position while keeping the freedrive button pressed. This hazard determined the vendor to implement a safeguard by locking the Movement pane in the newer version (NV) of the HMI whenever a remote connection to the robot is active.
- The NV of the HMI does not allow users to manually control the robot while a TCP/IP connection is active. However, some robot systems (e.g., Universal Robot) do not support upgrading the software of one series (e.g., CB-series) to that of another (e.g., E-series), whereby only the latter (i.e., the new version - NV) provides safeguards preventing the concomitant manual and remote manipulation of the robot.

Scenario 2: Additional safeguards for protecting the robot's safety configuration.
- An additional vulnerability of both OV and NV is represented by the simple password protection mechanism used to access the safety configuration of the system. This configuration allows expert users to set the speed and force limits in accordance with the robot's context of use. For example, in a training context, the robot's speed and force is typically limited to less than 10% of its maximum capabilities; whereas in a productive context, depending on the type of human-robot interaction, the safety configuration may allow higher speeds and forces of up to 100% of the robot's capabilities when it is operated behind a safety fence. In this context, the simple password-based protection mechanism can be relatively easily overcome by an attacker, for example, by manipulating the robot HMI's configuration files or otherwise acquiring the safety password. An additional hazard arises from the fact that, in some organizations, the safety password may be shared with several persons, who do not possess the same level of awareness concerning the safety risks entailed by human-robot interaction; or who may involuntarily keep passwords unprotected (e.g., written on a post-it note).

The RPA model may be composed of two software robots (SRI and SR2), implemented as two Python functions and code for starting these functions and running them forever in two separate threads. This RPA model provides the following functionality:
- SRI monitors the existence of a visual pattern in the VTP (virtual teaching pendant) indicating that the end user has switched to the manual control tab (as shown in Fig. 10). If that pattern is identified AND any of the ports provided by the control computer for remotely controlling the robot are occupied, then the "Program" tab is clicked and a message is shown indicating that the user is not allowed to control the robot manually while remote control is also active. This provides an additional safeguard aimed at preventing hazardous human-robot interactions by implementing a function which is only available in a newer version of the firmware that cannot be used with this robot type.
- SR2 provides a similar monitoring function as SRI, focused on monitoring the activation of a "Safety" tab. When the user clicks on the "Safety" tab, the SR2 recognizes the provided visual pattern and then automatically clicks on another tab and informs the users that the safety tab is locked. This provides an additional safeguard that prevents unauthorized users from changing the safety configuration of the robot.

In addition to the functionality shown in Fig. 13, the RPA model for these scenarios needs to be executed continuously. In case of an error, the two threads for SR1 and SR2 need to be restarted within a fraction of a second. This can be achieved using a simple try-catch error handling mechanism.

Using the same basic principle of monitoring graphical patterns in the robot's HMI, additional safeguards and security enhancements may be provided by the HMI automation module. For example, it may be possible to enable role-based authentication in robot HMIs which do not support this feature by providing additional authentication capabilities, such as a smart card reader attached to the HMI automation module, and software robots for continuously checking authentication status and for authorizing user actions (e.g., allowing or preventing access to different sections, menu items, control panes and panels, or other parts of the robot's HMI.

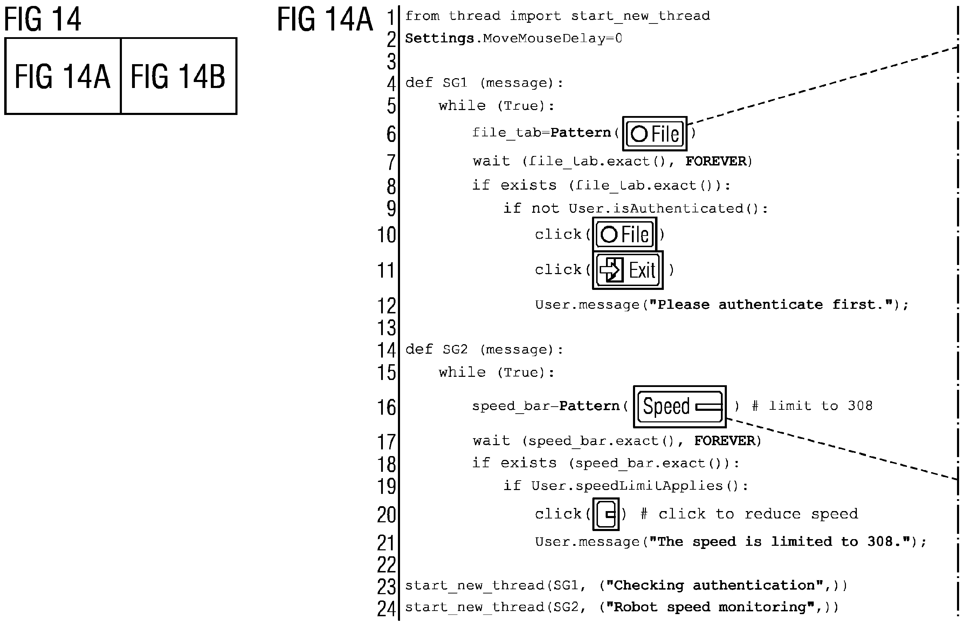

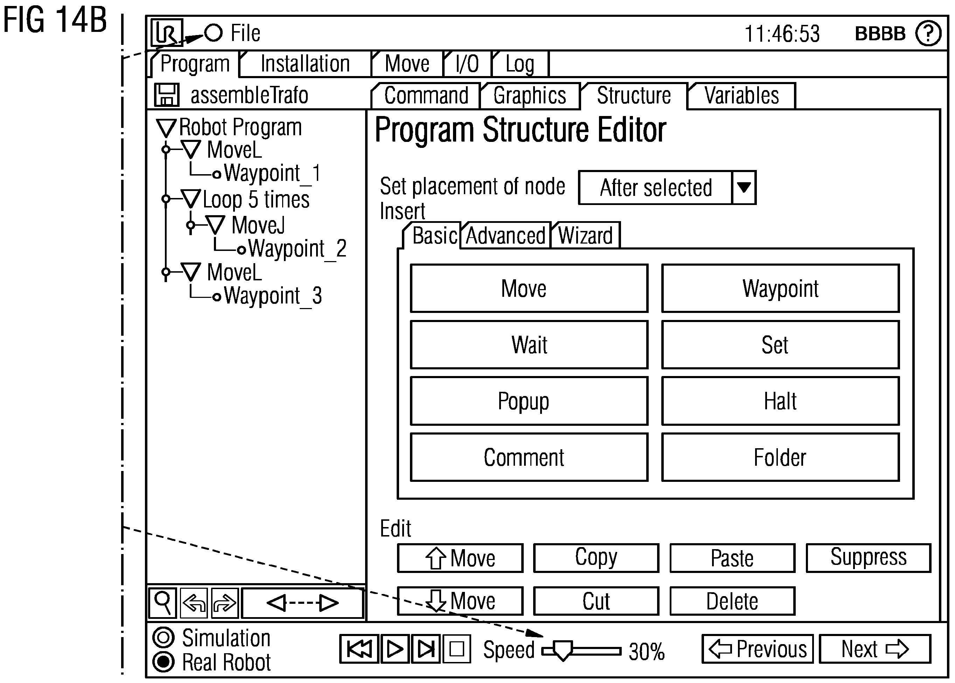

Fig. 14 illustrates this use case within the scope of the present disclosure.

Fig. 14 shows an example of implementation of authentication and authorization safeguards that monitor and interact with Polyscope-the HMI of the CB series Universal Robots.

UR cobots offer a basic, single-user authentication and authorization model based on two passwords-one for the general usage of the robot and one for the safety settings. Using RPA technologies, the HMI automation module may provide an additional safeguard to UR's HMI that extends its security features by enabling role-based authentication and authorization.

In order to operate the robot, the user must first authenticate, e.g., by inserting a smart card into a smart card reader, which sets the current user's identity in the configuration of the HMI automation module. This module executes the authentication (SG1) and authorization (SG2) safeguards shown in Fig. 14. The two safeguards run in separate threads and monitor the File menu and speed bar graphical elements in the robot's HMI. The File menu is visible only in the views for running and creating robot programs, which can be accessed only by authenticated users.

SG1 may assert that the current user is authenticated; otherwise it simply exits the programming view by clicking on the File menu and subsequently on the Exit menu item within a fraction of a second. The user is informed about the reason for this program behavior using the means implemented by the HMI automation module (e.g., visual or audio messages). If the user is properly authenticated, SG2 monitors the speed bar at the bottom of the screen to detect whether the user attempts to increase the speed beyond the limit imposed by specific roles. In line with the scenarios described above, when a trainee or an inexperienced user operates the robot, the SG2 safeguard will automatically reduce the robot speed to a predefined upper limit (30% in this example).

To accomplish this, SG2 may monitor the speed bar and trigger a click on its lower range whenever the speed is set to a value beyond the limit associated with the user's role. The HMI automation module thus extends the safety and security features of Polyscope in a non-intrusive way.

The effectiveness of this type of safeguards is based on the assumptions that:
- The user is slower than the software robots, which can react within a fraction of a second after the monitored pattern is detected and
- The Apparatus of the invention cannot be tampered with by potential attackers.
- A high image recognition precision is required to not confuse the patterns being monitored and used to switch the HMI views in order to prevent any erroneous functionality.

To this end, the automation apparatus 100 according to the present disclosure is required to provide sufficient computation power to fulfil the condition AND to be physically locked using a strong housing and lock such that no individual can access it other than the system administrator. To prevent the misrecognition of patterns, RPA models need to be extensively tested using varying levels of image recognition precision in order to determine potentially dangerous detection thresholds. In operation, the precision setting may be set to the maximum value.

Hereinafter, an example of RPA-enabled robot control using decision tables and image recognition is described.

Using similar mechanism as in the case of voice-based programming, the invention enables the control of the robot by triggering RPA commands upon the recognition of a particular image pattern on screen. These image patterns can, for example, be in the form of pictures of work pieces on a table captured by a digital camera. Upon recognition of an image, the RPA engine can load and execute a robot program within the robot's HMI, as specified in a decision table implementing an "if-this-then-that" as follows:
- If Pattern X if recognized on screen, then load and execute Robot Program X,
   Where Pattern X corresponds to a certain reference graphical element (i.e., a tailored image) captured from a digital camera attached to the HMI automation module using the RPA model designer and Robot Program X a robot program corresponding to the task associated with that screenshot.

To enable this functionality, an image preprocessor is required in order to correct eventual distortions in the captured image (i.e., scaling, rotation, and translation). This can be achieved using an image registration procedure, which is a standard function of specialized image processing packages, such as OpenCV or Matlab's Image Processing Toolset.

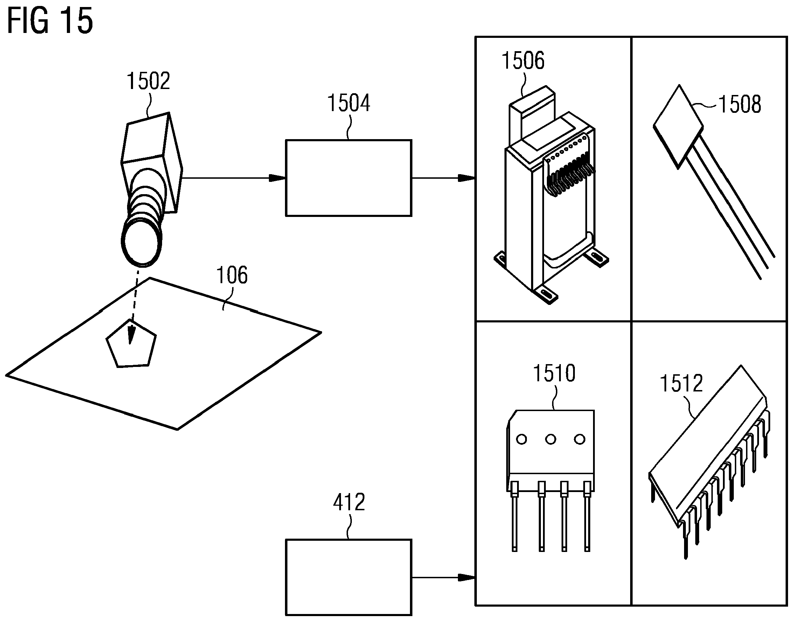

Fig. 15 shows an example of robot control using decision tables and image recognition according to the present disclosure.

Fig. 15 illustrates the mechanism by which an RPA model 412 can monitor a multi-display of work pieces on screen as well as automate tasks in the robot's HMI. A camera 1502 may capture a picture at regular intervals (e.g., 3 seconds) on VTP 106. Upon capturing an image, the image processor 1504 may register the image and display in all regions of the multi-display (i.e., four regions, e.g. transformer 1506, transistor 1508, diode rectifier bridge 1510 and dual comparator 1512). Meanwhile, the RPA model 412 may be input to the multi-display for the image processing.

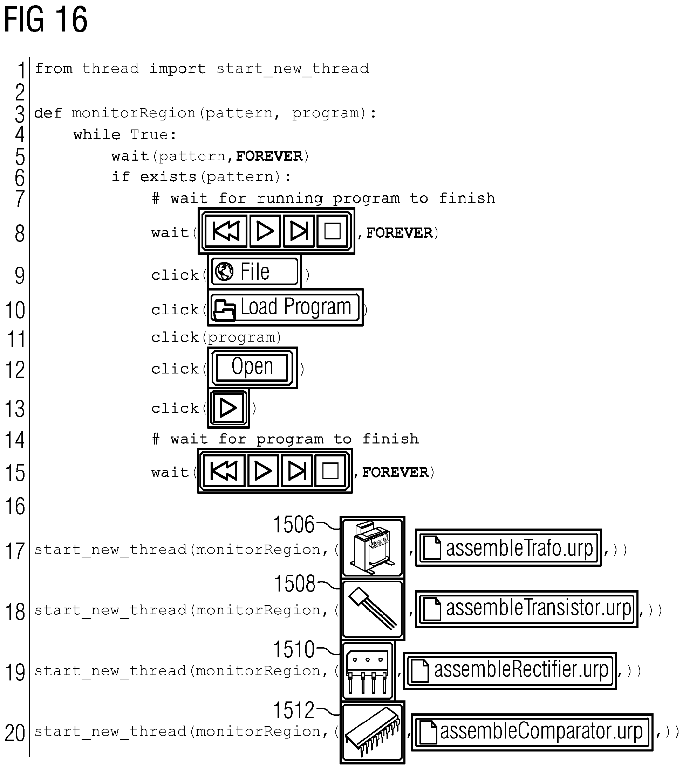

Fig. 16 shows an example of RPA model monitoring four regions 1506, 1508, 1510, 1512 of a multi-display and executing a program associated with the recognition of a certain pattern according to the present disclosure.

The RPA model monitors each of the four regions 1506, 1508, 1510, 1512 in separate threads, as shown in Fig. 15. If the correct image is recognized in the correct region of the multi-display, then the program uses the provided image parameters (i.e., "pattern" and "program" in the monitorRegion function) to load and execute the program corresponding to the recognized image pattern. This simple implementation assumes that the work pieces are placed in the correct position, with the image registration step only correcting slight distortions in order for the RPA engine to be able to recognize the correct image pattern.

The present disclosure thus facilitates the interoperation of different technologies (i.e., camera and robot) without the need of a direct, tightly coupled communication between them using specialized communication protocols (e.g., through Mod-Bus or other protocols), which require the implementation of possibly complex software components to manage the communication. The software implementing the features of the present invention can offer a set of predefined image recognition and program execution schemes, potentially covering a wide range of applications. Using RPA, users with little or no programming skills are able to configure the RPA tool which is delivered as part of the device pertaining to the present disclosure.

Both in the programming by voice and workpiece recognition examples, the automation apparatus 100 may monitor the GUIs of different subsystems of a robot system (e.g., voice interface, camera system, etc.) side by side with the robot's HMI being monitored in the VTP. Using RPA technologies, the automation apparatus 100 according to the present disclosure may thus monitor a mashup of GUIs of various interacting systems without the need of a direct physical or virtual connection between them. This reduces complexity in the wiring and programming of hardware/software systems composed of several subsystems (e.g., robot, camera, voice interface, etc.) and improves usability and integration capabilities of such systems.

Hereinafter, an example of RPA-enabled error monitoring, handling, and recovery and interoperability between the HMIs of different systems are described.

Industrial robot programming environments and scripting languages (including those that can be used within the robot's HMI) usually provide very limited or no error handling and recovery mechanisms. If, for example, a collaborative, sensitive robot stops due to a collision or an unreachable target pose, human intervention is needed. In the industrial domain, there are scenarios in which collaborative robots are operated autonomously (i.e., behind safety fences or other protective panels) or semi-autonomously (i.e., in human-robot coexistence configurations, when humans are out of the reach of the robot). In such scenarios, an error caused by an unexpected situation (i.e., misplaced work piece) can stop production, which is highly undesirable in a productive factory.

When entering an error state, for example, due to a collision, some industrial robots may need to be restarted, while most of them require a series of clicks using the provided teach pendant and HMI. These actions, which are currently being performed by authorized human operators, can be automated using RPA models within the scope of the present invention. According to an embodiment of the present disclosure, a protective stop error may be notified, when a robot reaches the safety plane limits defined in the robot's safety configuration. Upon encountering such an error, an RPA model monitoring the robot's HMI may, for example, automatically save the log report, then re-enable the robot, load an alternative (possibly slower yet safe and effective program), and continue operation until a human can intervene to analyze the root cause of the error.

The RPA model according to the present disclosure can also trigger a monitoring camera to capture a picture of the robot and its context when the error occurred, which can be associated with a specific error log. This provides human operators with additional information in their attempt to identify and remove the root cause of the error.

According to an embodiment of the present disclosure, an error requiring re-initialization of the robot may occur. Re-initialization may be accomplished by an RPA model, which can subsequently load and execute an alternative, safe and effective program without downtimes. Before reinitializing the robot (for example, using a simple sequence of clicks on regions specified by a RPA model designers via screenshots), the RPA model can also take and save a screenshot of the HMI as well as the physical environment of the robot at the time of the error to enable the root cause analysis of the error at a later time, while limiting the downtime of the robot.

In yet another scenario, upon recognizing an error state in the robot's HMI, the RPA model may take another action in the HMI of another system. To enable this, the computation device of the present invention may monitor the HMI of different systems, including that of a robot, and perform automated actions in any of them, depending on the configuration and requirements of the overall production system.

In sum, the present disclosure provides a wide range of capabilities concerning the non-intrusive, automated manipulation of robot and other industrial HMIs by monitoring them on the computation device (or apparatus) pertaining to the present invention and providing means for RPA model designers to programmatically define appropriated courses of actions along the lines described in the previous sections of this description of the invention.

According to embodiments of the present disclosure, advantages regarding business perspective may be achieved as follows.

Looking at the success of RPA (robotic process automation) tools (like UIPath, Automation Everywhere, etc.) in other domains, the present disclosure opens up a new, unexplored industrial market focused on creating a product lines focused on HMIs from the industrial domain.

For example, "Industrial RPA" or "Industrial HMI automation" products and product lines may be developed, targeting all digital industries, notably factory automation. In this domain, the heterogeneity of technologies is a well-known and decried problem, with factories often being locked in no longer desirable vendor relations. The heterogeneity of third-party technologies also hinders the integration and standardization of systems and processes, which requires consensus on organizational and technical levels driven by conflicting interests (i.e., robot vendor vs. industrial manufacturer interests). Using an "Industrial HMI automation device and software" implementing the functionality described in the present invention, it is possible to provide an alternative, more simple and effective way of automating robot programming and operation along the scenarios described above, which can work with a very wide variety of existing technologies. As opposed to ROS-integrated software or third-party robot programming environments, the mechanisms described in the present invention can be used by experts and non-experts alike. This represents a significant advantage for industrial robot users, which are typically organizations that strive to reduce costs with personnel. An easy to use Industrial HMI automation device and software thus has a significant market potential in the range of hundreds of millions of Euros worldwide.

As demonstrated by RPA platforms in other business domains, this technology can significantly reduce the amount of redundant, cumbersome, and repetitive tasks entailed by using highly heterogeneous third-party software tools. Through HMI automation, the HMIs of robots and other industrial machines can be rendered more intuitive, more accessible for impaired users, more efficient by eliminating redundancy and repetition, more cloud-integrated, more intelligent through smart data analysis and machine learning, and more vendor-independent.

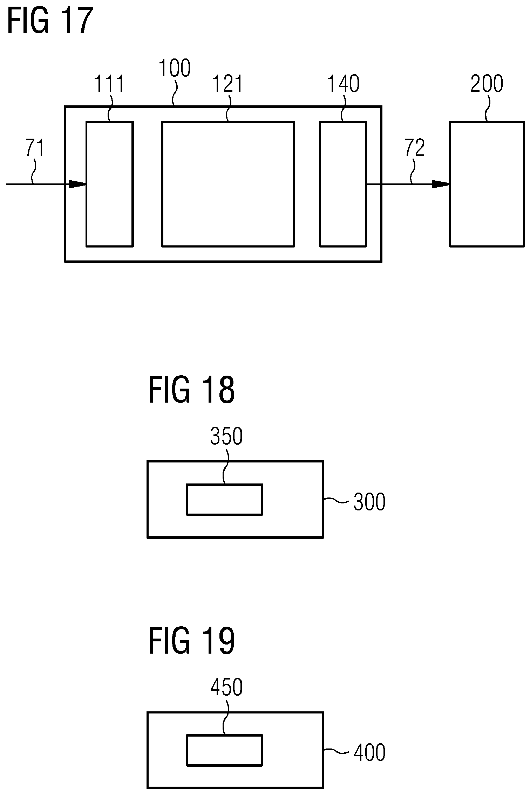

Fig. 17 shows an apparatus (an automation apparatus) 100 according to an embodiment of the present disclosure. In particular, the apparatus 100 is configured to perform the method according to any embodiment of the first aspect of the present disclosure.

The apparatus 100 comprises an input interface 111 for receiving an input signal 71. The input interface 111 may be realized in hard- and/or software and may utilize wireless or wire-bound communication. For example, the input interface 111 may comprise an Ethernet adapter, an antenna, a glass fiber cable, a radio transceiver and/or the like.

The apparatus 100 further comprises a computing device 121 configured to perform the steps S202 through S210 and/or S1202 through S1206. The computing device 121 may in particular comprise one or more central processing units, CPUs, one or more graphics processing units, GPUs, one or more field-programmable gate arrays FPGAs, one or more application-specific integrated circuits, ASICs, and or the like for executing program code. The computing device 121 may also comprise a non-transitory data storage unit for storing program code and/or inputs and/or outputs as well as a working memory, e.g. RAM, and interfaces between its different components and modules.

The apparatus may further comprise an output interface 140 configured to output an output signal 72. The output signal 72 may have the form of an electronic signal, as a control signal for a display device 200 for displaying the semantic relationship visually, as a control signal for an audio device for indicating the determined semantic relationship as audio and/or the like. Such a display device 200, audio device or any other output device may also be integrated into the apparatus 100 itself.

Fig. 18 shows a schematic block diagram illustrating a computer program product 300 according to an embodiment of the present disclosure, i.e. a computer program product 300 comprising executable program code 350 configured to, when executed (e.g. by the apparatus 100), perform the method according to an embodiment of the present disclosure.

Fig. 19 shows a schematic block diagram illustrating a non-transitory computer-readable data storage medium 400 according to an embodiment of the present disclosure., i.e. a data storage medium 400 comprising executable program code 450 configured to, when executed (e.g. by the apparatus 100), perform the method according to the embodiment of the present disclosure.

In the foregoing detailed description, various features are grouped together in the examples with the purpose of streamlining the disclosure. It is to be understood that the above description is intended to be illustrative and not restrictive. It is intended to cover all alternatives, modifications and equivalence. Many other examples will be apparent to one skilled in the art upon reviewing the above specification, taking into account the various variations, modifications and options as described or suggested in the foregoing.

## Claims

1. A computer-implemented method for providing an enhanced human-machine interface, HMI, to control a robot (120), comprising at least the steps of:
monitoring (S202) a manipulation input by a user (122) for an operation of the robot on the enhanced HMI (110, 116), which is enhanced from a proprietary HMI (108, 118) proprietary to the robot (120);
generating (S204) a first program in a first program environment for the enhanced HMI (110, 116) in response to the monitored manipulation;
retrieving (S206) action information relating to actions to be performed as part of the operation of the robot (120), wherein the actions are defined in a second program environment for the proprietary HMI (108, 118);
generating (S208) a second program in the second program environment corresponding to the first program using the retrieved action information; and
controlling (S210) the robot (120) to perform the operation using the second program.

2. The method of claim 1,
wherein the proprietary HMI (108, 118) is a robot-specific HMI provided by a vendor for the robot, and the enhanced HMI (110, 116) is an HMI common to a plurality of robots provided by an automation apparatus (100).

3. The method of claim 1 or claim 2,
wherein the manipulation is input by the user via a physical teaching pendant, PTP (114), of an automation apparatus (100) including a physical proprietary HMI (118) and a physical enhanced HMI (116),
wherein the manipulation is monitored on a virtual teaching pendant, VTP (106), of the automation apparatus including a virtual proprietary HMI (108) and a virtual enhanced HMI (110), and
wherein the VTP (106) replicates all displays and functions of the PTP (114).

4. The method of claim 3,
wherein the controlling (S210) the robot includes propagating the second program from the VTP (106) to the PTP (114) such that the PTP (114) controls the robot (120).

5. The method of claim 3 or claim 4,
wherein the controlling (S210) the robot includes controlling the PTP (114) using the VTP (106) based on a remote viewing and control technology.

6. The method of any of claims 3 to 5,
wherein the monitoring (S202) of the manipulation is performed based on an image processing for image comparison and/or image recognition on the PTP (114) and the VTP (106).

7. The method of any of claims 1 to 6,
wherein the monitoring (S202) of the manipulation is performed based on a machine learning technology.

8. The method of any of claims 1 to 7,
wherein the operation is defined in the enhanced HMI (110, 116), and the operation entails a combination of a plurality of actions.

9. The method of any of claims 1 to 8,
wherein the operation is displayed to be manipulated by the user (122) on the enhanced HMI (110, 116), and is not displayed on the proprietary HMI (108, 118).

10. The method of any of claims 1 to 9,
wherein the first program environment is configured to activate a function defined in a second program environment.

11. The method of claim 10,
wherein the function is an input of an input signal on at least one of buttons displayed on a graphical user interface, GUI, of the proprietary HMI (108, 118), and/or an input of textual input to the GUI of the proprietary HMI (108, 118).

12. The method of any of claims 1 to 11,
wherein the manipulation has an input type of at least one of a voice, a gesture or a brain wave.

13. The method of any of claims 1 to 12,
wherein the first program and the second program include a plurality of software robots, SRs.

14. An automation apparatus (100) configured to perform the method according to any of claims 1 to 13.

15. A computer program product (300) comprising executable program (350) code configured to, when executed, perform the method according to any of claims 1 to 13.

16. A non-transitory computer-readable data storage medium (400) comprising executable program code (450) configured to, when executed, perform the method according to any of claims 1 to 13.
